Europäisches Patentamt

European Patent Office

Office européen des brevets

(11) Publication number: **0 438 880 A2**

# EUROPEAN PATENT APPLICATION

(21) Application number: **90313428.6**

(22) Date of filing: **11.12.90**

(51) Int. Cl.⁵: **G01J 5/02, G01K 11/00**

(30) Priority: **23.01.90 US 468483**

(43) Date of publication of application:
**31.07.91 Bulletin 91/31**

(84) Designated Contracting States:
**BE CH ES FR GB IT LI SE**

(71) Applicant: **WESTINGHOUSE ELECTRIC CORPORATION**
**Westinghouse Building Gateway Center**
**Pittsburgh Pennsylvania 15222(US)**

(72) Inventor: **Morris, Emery Leroy**
**1620 Williamsburg Road**
**Mt Lebanon, PA 15243(US)**

(74) Representative: **van Berlyn, Ronald Gilbert et al**
**23, Centre Heights**
**London, NW3 6JG(GB)**

(54) **Apparatus and method for monitoring temperature of a fluid flowing in a pipe.**

(57) An optical fiber (20) in optical communication with the hollow interior portion (18) of a thermowell (12) and coupled with suitable infrared detecting electronics. Infrared radiation emitted within the hollow portion (18) of the thermowell (12), due to the heat of the fluid passing through the pipe (10) in which the thermowell (12) is located, can be received and conveyed by the optical fiber (20) to the detecting electronics. The detecting electronics may be located at a substantial distance from the hostile environment in which the thermowell (12) is located. Enhancement of the reception and conveyance of infrared radiation may be accomplished, by employing a quartz or sapphire rod (32) at the radiation receiving tip of the optical fiber (20).

FIG. 1

## APPARATUS AND METHOD FOR MONITORING TEMPERATURE OF A FLUID FLOWING IN A PIPE

### BACKGROUND OF THE INVENTION

The present invention relates to an improved method and apparatus for detecting temperature in a thermowell located, for example, in a cooling fluid pipe of a power generating facility.

Typically, power generating facilities, such as nuclear power plants, employ elaborate cooling systems. Such cooling systems employ a coolant fluid which is conveyed through a system of coolant pipes. The coolant pipes may be arranged to convey the coolant fluid in a closed path between a high heat area (e.g., in or near a reactor vessel) and a heat dissipator (e.g., a condenser or a radiator). Such cooling systems can be extremely important in safely operating a power generating facility. Moreover, in typical nuclear power generating facilities, such cooling systems can be indispensable in preventing a melt-down condition.

It is common practice in the power generating field to monitor the temperature of the coolant fluid conveyed in the coolant pipes. Such temperature monitoring can provide a forewarning of a dangerous condition, e.g., an excessive heat buildup or a nuclear melt-down condition. As such dangerous conditions may arise within a relatively short period of time, it is beneficial to provide a temperature monitoring system which provides fast and accurate temperature detection responses.

Conventional temperature monitoring systems include thermowells located in the coolant pipes at various temperature monitoring locations in the coolant pipe system. A conventional thermowell comprises a hollow tubular member which extends through the wall of a pipe and into the fluid flow area of the pipe. Typically, a heat sensing probe, e.g., a thermistor or metal which exhibits a temperature dependent resistance, is located within the hollow tubular portion of the thermowell. Alternatively, a thermocouple device connected via electrical leads to suitable electronics may be disposed in the hollow portion of the thermowell.

Some coolant systems, however, preclude the use of such known sensors due to the extremely hostile electrical, temperature, and/or radioactive environment in which they are operated. For example, the extremely high and varying electromagnetic fields generated near generator windings preclude placement of conventional temperature sensors too near the windings. As a result, temperature sensors in conventional power plant cooling systems are typically arranged at a distance from windings. Due to the relatively distant placement of such sensors, a dangerous winding temperature may exist well before it is detected.

Other hostile conditions to which a temperature sensor may be exposed include the extreme pressures (e.g., approximately 20.68 MPa) existing within coolant pipes, traces of caustic chemicals in the coolant pipes and the coolant fluid, and nuclear radiation levels typically ranging from approximately 820 rad/hr in the center of a coolant pipe to approximately 470 rad/hr at the inside diameter of the pipe and dropping to approximately 165 rad/hr at the outside diameter of the pipe.

A temperature sensor employed for monitoring the temperature of coolant fluid in a nuclear containment area should operate accurately within the temperature range of 260°C to 345°C. Furthermore, nuclear power generating facilities require a fast response, highly accurate temperature monitoring system in order to maximize plant efficiency and safety. Typical resistive temperature detectors have shown an approximately 4-second delay in sensing and indicating coolant temperatures. Such a delay, especially in a nuclear power generating facility, seriously compromises the operational efficiency and safety integrity of the plant.

### SUMMARY OF THE INVENTION

In its broad form, the invention is an apparatus for monitoring the temperature of a fluid flowing through the hollow interior section of a pipe, said apparatus comprising a signal processor for providing temperature indications, characterized by a thermowell having an extension extending into the hollow interior section of the pipe; and an optical fiber having a first end and a second end, the first end being in optical communication with said thermowell extension and the second end being in optical communication with the signal processor, said optical fiber being operable to communicate signals from said thermowell extension to said second fiber end.

Moreover, in its broad form the invention also is a method of monitoring the temperature of fluid flowing through a fluid pipe, said method including the step of providing a signal processor, said method characterized by the steps of providing a thermowell having a substantially hollow interior section extending within the pipe; and arranging an optical fiber in optical communication with said substantially hollow interior section of said thermowell and in optical communication with the signal processor.

It is therefore an object of the present invention to provide an improved method and apparatus for quickly and accurately detecting temperature in a fluid conveying pipe, such as a power plant coolant pipe.

It is also an object of the present invention to provide such an improved method and apparatus which is operable in a hostile environment, such as within a relatively strong electromagnetic field, within a relatively high heat area, and/or within a radioactive area.

These and other objects are accomplished according to the present invention by providing an optical conveying device in optical communication with the interior of a thermowell. The optical communication device may comprise, for example, an optical fiber in optical communication with the hollow interior portion of a thermowell and coupled with suitable infrared detecting electronics. In this manner, infrared radiation emitted within the hollow portion of the thermowell, due to the heat of the fluid passing through the pipe in which the thermowell is located, can be received and conveyed by the optical fiber to the detecting electronics. The detecting electronics may be located at a substantial distance from the hostile environment in which the thermowell is located. Since the conveyance of infrared radiation through the optical fiber occurs at the speed of light, the sensing electronics can be remotely located without compromising high speed temperature detection. Additionally, the reception and transmission of infrared radiation by the optical fiber can be performed passively to, thereby, conserve energy.

Enhancement of the reception and conveyance of infrared radiation may be accomplished, according to an embodiment of the present invention, by employing a quartz or sapphire rod at the radiation receiving tip of the optical fiber. Other embodiments may include an infrared driver coupled with the optical fiber for testing and/or calibrating the detecting electronics. Yet other embodiments may employ an active radiation emitting device, located within the thermowell, for emitting a radiation signal dependent upon the temperature of the thermowell.

## BRIEF DESCRIPTION OF THE DRAWINGS

The detailed description of the invention will be made with reference to the accompanying drawings, wherein like numerals designate corresponding parts in the several Figures.

Figure 1 is a cut-away view of a portion of a fluid pipe to which an embodiment of the present invention is applied.

Figure 2 is a side view of a thermowell according to another embodiment of the present invention.

Figure 3 is a plan view of a testing and/or calibrating system according to an embodiment of the present invention.

Figure 4 is a plan view of a testing and/or calibrating system according to another embodiment of the present invention.

## DESCRIPTION OF THE PREFERRED EMBODIMENTS

The following detailed description is of the best presently contemplated mode of carrying out the invention. This description is not to be taken in a limiting sense, but is made merely for the purpose of illustrating the general principles of the invention. The scope of the invention is best defined by the appended claims.

The present invention relates to an improved method and apparatus for monitoring the temperature of fluid in a fluid pipe. Typical applications of the present invention include monitoring systems for monitoring coolant fluid in a power generating facility. Such coolant fluids may be circulated through a coolant pipe system arranged adjacent or within a generator winding or adjacent or within a nuclear containment vessel. However, it will be recognized that embodiments of the present invention may be employed with other fluid pipe systems or fluid containment vessels for which fluid temperature monitoring is desired.

According to the present invention, temperature of the fluid flowing through a fluid pipe is monitored by monitoring infrared radiation emitted within a thermowell extended into the pipe. All objects emit infrared radiation dependent on the temperature of the object. The amount of energy and the peak wavelength of the infrared radiation depend on, and exhibit a fixed relationship with, the temperature of the object being monitored. As the temperature of the object increases, the energy radiated increases, e.g., by a power of four, and the peak wavelength shifts to shorter wavelengths.

With this in mind, an embodiment of the present invention employs the wall of the thermowell as an infrared emitting source. An optical fiber is arranged to optically communicate with the infrared radiation emitted from the thermowell wall. Such infrared radiation is communicated through the optical fiber to suitable infrared detecting electronics (as are well known in the art).

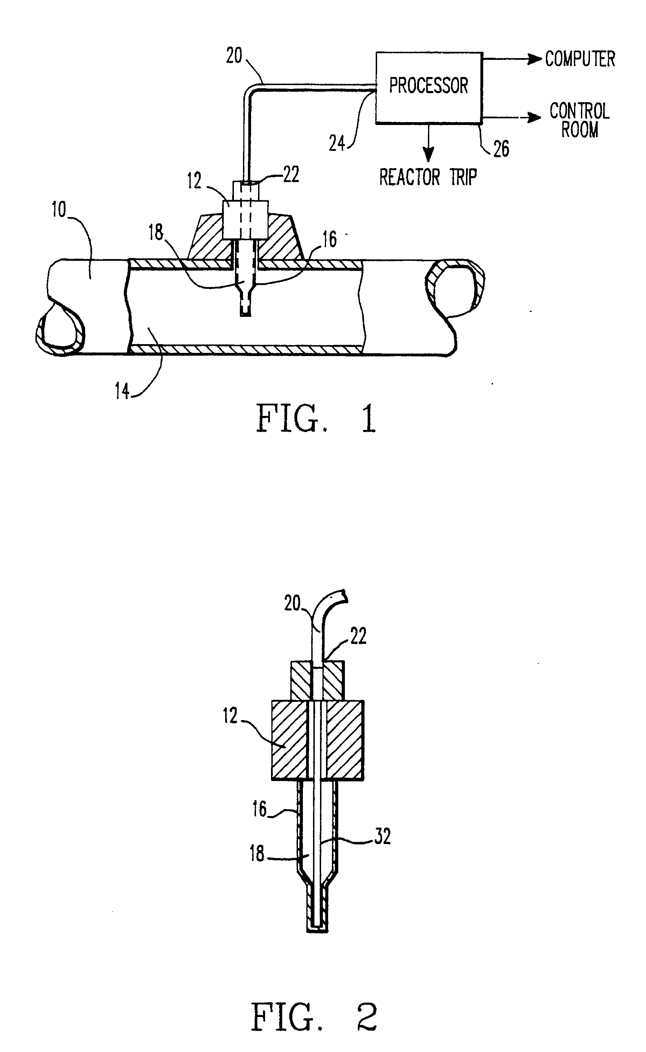

Figure 1 shows a cut-away view of a portion of a pipe 10 having a thermowell 12 extending through its circumferential wall. Pipe 10 can be a coolant pipe, e.g., in a cooling system of a power generating facility, as described above.

Pipe 10 includes a hollow interior section 14 in which fluid, such as coolant fluid, may flow. The thermowell 12 shown in the Figure 1 embodiment includes a hollow extension 16 which extends into hollow section 14 of pipe 10.

Hollow extension 16 includes a hollow interior section 18. Preferably, the hollow interior section 18 of extension 16 is sealed with respect to the interior section 14 of pipe 10. In this manner, hollow extension 16 may extend into or adjacent fluid flowing in the interior section 14 of pipe 10 without allowing fluid to collect within the hollow interior section 18 of extension 16. It will be recognized that thermowell 12 may be specifically manufactured for the present fiber optic monitoring system or may be a conventional thermowell adapted for use with the present fiber optic monitoring system.

An optical fiber 20 has a first end 22 which is coupled to thermowell 12 and is provided in optical communication with the interior section 18 of extension 16. A second end 24 of optical fiber 20 is coupled to a signal processor 26. If necessary, couplers (not shown) may be used to couple fiber ends 22 and 24 to thermowell 12 and signal processor 26, respectively.

Signal processor 26 comprises conventional means for recognizing the energy level and/or the wavelength of infrared radiation communicated to fiber end 24. Electronics for performing these functions are well known in the art. Processor 26 may also include means for determining whether the energy level and/or peak wavelength of such infrared radiation corresponds to an abnormal temperature within pipe 10.

Figure 2 shows thermowell 12 and optical fiber 20 arranged according to another embodiment of the present invention. In the Figure 2 embodiment, a rod 32 is disposed within the interior section 18 of extension 16. Rod 32 is shown as extending from the free end of extension 16 through the interior of thermowell 12 to or adjacent to fiber end 22.

Rod 32 comprises a material selected to enhance transmission and communication of infrared energy as is known in the art. Such materials may include quartz, sapphire, or any other suitable material.

The operation of the embodiments shown in Figures 1 and 2 will now be described. As fluid flows through interior section 14 of pipe 10, heat from the fluid transfers to extension 16 of thermowell 12. As a result, extension 16 attains a temperature which is dependent upon the temperature of the fluid flowing within pipe 10. As discussed above, since all bodies emit infrared radiation which is dependent upon the temperature of the body, extension 16 will emit infrared radiation into the hollow interior section 18 thereof. The energy and wavelength of the infrared radiation emitted into hollow interior section 18 will be dependent upon the temperature of the walls of extension 16, which is dependent upon the temperature of the fluid flowing within pipe 10.

Fiber end 22 of optical fiber 20 is arranged in optical communication with interior section 18 of extension 16. As a result, infrared radiation emitted within interior section 18 is optically communicated by optical fiber 20 to fiber end 24, which is coupled with signal processor 26.

Signal processor 26 analyzes the radiation communicated to fiber end 24, e.g., to determine the energy level and/or the peak wavelength of the radiation. Additionally, processor 26 may determine whether the energy level and/or peak wavelength corresponds to an abnormal temperature within pipe 10.

In the Figure 1 embodiment, processor 26 includes signaling means for signaling a control room upon the occurrence of the detection of an abnormal temperature. Additionally, processor 26 includes signaling means which signals a reactor trip mechanism (not shown) for tripping a nuclear reactor shutdown operation. Processor 26 also includes signaling means for providing a computer (not shown) with data corresponding to the energy level and/or wavelength of the infrared radiation communicated to fiber end 24. The computer (not shown) may then employ this data in determining plant operation parameters.

In order to enhance the reception and communication of infrared radiation, the Figure 2 embodiment includes rod 32, such as a quartz or sapphire rod. The rod 32 is arranged within interior section 18 of extension 16 so as to receive infrared radiation emitted from the walls of extension 16. Infrared radiation is communicated (and enhanced) by rod 32 to fiber end 22 of optical fiber 20. Once the infrared radiation is communicated to optical fiber 20, the system according to the Figure 2 embodiment operates similar to that described above with respect to the Figure 1 embodiment.

Since the time required for communicating heat energy applied by the fluid to extension 16 as infrared radiation in interior section 18 of extension 16, is relatively short, and since the communication of infrared radiation from interior section 18 to fiber end 24 occurs at the speed of light, a signal representing the substantially instantaneous temperature of fluid in pipe 10 can be communicated to processor 26. The delays in producing infrared radiation within interior section 18 and in processing the infrared radiation signal communicated to fiber end 24 can be very short (on the order of less than 1 second). As a result, the temperature monitoring system according to the present invention can have an extremely short reaction time. This short reaction time is very desirable in such high heat and high pressure systems as cooling systems employed in power generating plants. Moreover, quick responding monitoring systems are essential in nuclear power generating facilities for detecting dangerous melt-down or near melt-down conditions.

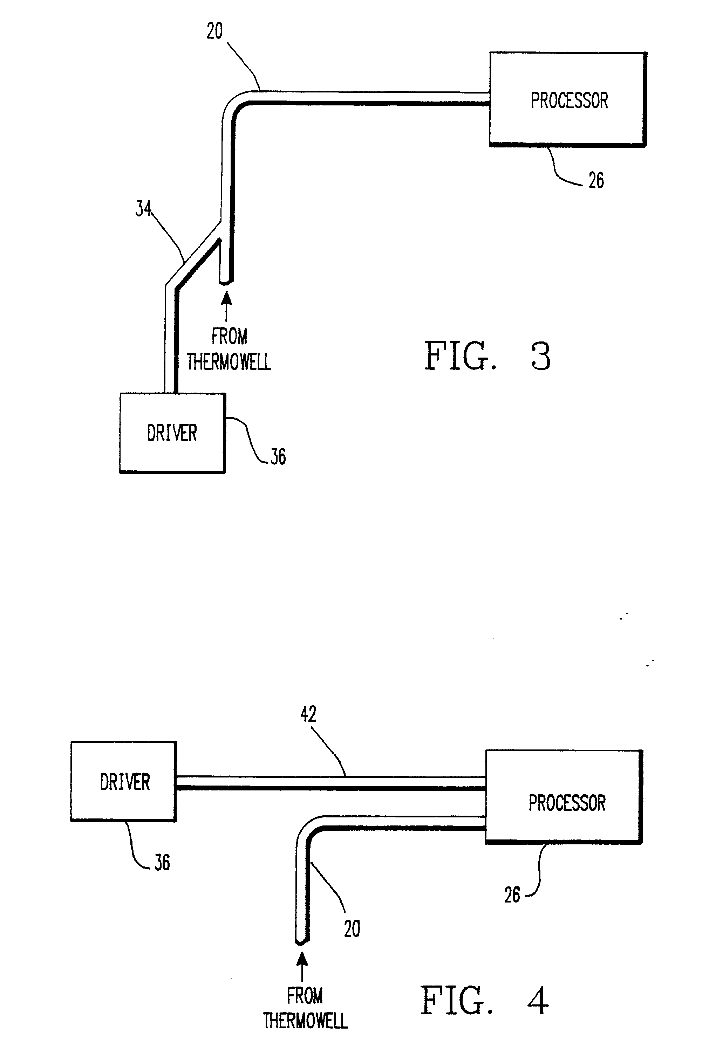

Figures 3 and 4 show embodiments of the present invention which include testing and/or calibration systems. In the embodiment shown in Figure 3, optical fiber 20 is coupled with processor 26 as described above with reference to Figure 1. However, optical fiber 20 includes a branch fiber 34 which is in optical communication with fiber 20 and which is coupled to a signal driver 36. Signal driver 36 operates to produce an optical signal, such as an infrared signal similar to the infrared signal expected to be emitted within thermowell 12. The optical signal produced by driver 36 is emitted and communicated through fiber branch 34 to optical fiber 20 and then to processor 26. In this embodiment, processor 26 may include means for receiving the optical signal produced by driver 36 and for calibrating the detecting electronics. Additionally, the optical signal produced by driver 36 may be employed by processor 26 for testing the sensitivity of and time response of the detecting electronics.

Another embodiment of the present invention which includes a testing system is shown in Figure 4. In the Figure 4 embodiment, optical fiber 20 extends between processor 26 and thermowell 12 (not shown in Figure 4) as described with reference to Figure 1. Optical fiber 42 is also coupled to processor 26. Driver 36 is provided in optical communication with processor 26 through optical fiber 42 and operates in a similar manner as described above with reference to Figure 3. Processor 26 receives test or calibration signals from optical fiber 42 and receives actual temperature monitoring signals through optical fiber 20. The operation of processor 26 is similar to that described above with reference to Figures 1 and 3.

Other embodiments of the present invention may include a signal driver provided within processor 26 and a mirror or other reflecting means provided within thermowell 12. This system may operate to produce a testing or calibration signal within processor 26, transmit the signal through optical fiber 20 to thermowell 12 and reflect the signal back from thermowell 12 to processor 26.

Yet other embodiments of the present invention may include a temperature responsive radiation emitting device disposed within hollow interior section 18 of extension 16. The temperature responsive radiation emitting device may be an active or a passive device which emits a temperature dependent radiation signal. In such embodiments, processor 26 is designed to detect and analyze the radiation signal emitted by the radiation emitting device and communicated by optical fiber 20.

The above-described apparatus can provide a substantially instantaneous temperature monitoring system. Additionally, the above-described apparatus can be operable within extremely hostile environments, e. g., within high heat areas, high pressure areas, strong electromagnetic fields, and radioactive environments. Processing electronics can be located remotely from the location at which the thermowell is arranged and temperature is detected. Transmission of signals between the remote processing electronics and the thermowell can be performed energy efficiently. These and other benefits achieved according to embodiments of the present invention are particularly useful in power generating facilities, including nuclear power generating facilities.

While the description above refers to particular embodiments of the present invention, it will be understood that many modifications may be made without departing from the spirit thereof. The accompanying claims are intended to cover such modifications as would fall within the true scope and spirit of the present invention.

The presently disclosed embodiments are therefore to be considered in all respects as illustrative and not restrictive, the scope of the invention being indicated by the appended claims, rather than the foregoing description, and all changes which come within the meaning and range of equivalency of the claims are therefore intended to be embraced therein.

## Claims

1. An apparatus for monitoring the temperature of a fluid flowing through the hollow interior section (14) of a pipe (10), said apparatus comprising a signal processor (26) for providing temperature indications, characterized by:
   a thermowell (12) having an extension (16) extending into the hollow interior section (14) of the pipe (10); and
   an optical fiber (20) having a first end (22) and a second end (24), the first end (22) being in optical communication with said thermowell extension (16) and the second end (24) being in optical communication with the signal processor (26), said optical fiber (20) being operable to communicate signals from said thermowell extension (16) to said second fiber end (24).

2. Apparatus as claimed in claim 1 wherein the fluid flowing within the pipe (10) transfers heat energy to said thermowell extension (16), whereby infrared radiation is emitted by said thermowell extension (16), and wherein said optical fiber (20) is arranged to receive the infrared radiation emitted by said thermowell extension (16).

3. Apparatus as claimed in claim 1 wherein said thermowell extension (16) has a substantially hollow interior (18), and wherein said apparatus is further characterized by a rod (32) arranged within said interior (18) of said thermowell extension (16), said rod (32) being composed of at least one of sapphire and quartz, wherein said first end (22) of said optical fiber (20) is arranged in optical communication with said rod (32).

4. Apparatus as claimed in claim 1 further characterized by signal processor tester (34, 36) operatively connected with said signal processor (26).

5. Apparatus as claimed in claim 5 wherein said signal processor tester (34, 36) is characterized by:
a second optical fiber (34) having a first end in optical communication with said signal processing device (26), said second optical fiber (34) having a second end; and
a signal driver (36) optically connected with said second end of said second optical fiber (34).

6. Apparatus as claimed in claim 5 wherein said signal processor tester (34, 36) comprises:
a branch fiber (34) having a first end branching from said optical fiber (20), and having a second end; and
a signal driver (36) provided in optical communication with the second end of said branch fiber (34).

7. A method of monitoring the temperature of fluid flowing through a fluid pipe (10), said method including the step of providing a signal processor (26), said method characterized by the steps of:
providing a thermowell (12) having a substantially hollow interior section (18) extending within the pipe (10); and
arranging an optical fiber (20) in optical communication with said substantially hollow interior section (18) of said thermowell (12) and in optical communication with the signal processor (26).

8. A method as claimed in claim 7, further characterized by:
emitting infrared radiation into said substantially hollow interior section (18) of said thermowell (12); and
communicating the infrared radiation through said optical fiber (20) to said signal processor (26).

9. A method as claimed in claim 7 wherein said step of emitting infrared radiation is characterized by the steps of:
absorbing heat into the thermowell walls from the fluid flowing through the pipe (10); and
emitting infrared radiation into said interior section (18) of said thermowell (12) from the thermowell walls;
wherein the infrared radiation has at least one of an energy level and a peak wavelength which is dependent upon the heat absorbed from the fluid and, thus, the fluid temperature.

10. A method as claimed in claim 9, further characterized by the step of determining at least one of the energy level and the peak wavelength of the communicated infrared radiation with the signal processor (26).

11. A method as claimed in claim 7, characterized by:
producing radiation dependent upon the temperature of the fluid flowing through the pipe (10); and
detecting said radiation.

12. A method as claimed in claim 11 wherein said radiation comprises optical radiation and wherein said method is further characterized by the step of transmitting said optical radiation with an optical fiber (20) toward a radiation detecting device (26).

13. A method as claimed in claim 11 wherein said step of producing radiation is characterized by the step of producing infrared radiation within the interior (18) of a thermowell (12).

14. A method as claimed in claim 13 wherein said step of detecting said radiation is characterized by the steps of:
receiving said radiation in an optical fiber (20); and
transmitting said radiation with said optical fiber (20) toward a radiation detecting device (26).

15. A method as claimed in claim 11 wherein said step of detecting said radiation is characterized by the steps of:
receiving said radiation in an optical fiber (20); and
transmitting said radiation with said optical fiber (20) toward a radiation detecting device (26).

FIG. 1

FIG. 2

FIG. 3

FIG. 4